Europäisches Patentamt

European Patent Office

Office européen des brevets

(11) Veröffentlichungsnummer: **0 264 401**
**B1**

(12) **EUROPÄISCHE PATENTSCHRIFT**

(45) Veröffentlichungstag der Patentschrift: 04.07.90

(51) Int. Cl.⁵: **B 65 G 47/54**

(21) Anmeldenummer: 87902392.7

(22) Anmeldetag: 11.04.87

(86) Internationale Anmeldenummer:
PCT/DE87/00166

(87) Internationale Veröffentlichungsnummer:
WO 87/06564 05.11.87 Gazette 87/24

(54) FÖRDEREINRICHTUNG ZUM TRANSPORT VON WERKSTÜCKEN.

(30) Priorität: 03.05.86 DE 3615064

(43) Veröffentlichungstag der Anmeldung:
27.04.88 Patentblatt 88/17

(45) Bekanntmachung des Hinweises auf die
Patenterteilung:
04.07.90 Patentblatt 90/27

(84) Benannte Vertragsstaaten:
CH DE FR GB IT LI

(56) Entgegenhaltungen:
DE-A-2 108 023
US-A-3 051 289
US-A-3 690 435

(73) Patentinhaber: ROBERT BOSCH GMBH
Postfach 50
D-7000 Stuttgart 1 (DE)

(72) Erfinder: BURGER, Karl-Heinz
Forkenstr. 16
D-7580 Bühl-Vimbuch (DE)
Erfinder: FIMPEL, Walter
Kolbackerstr. 15
D-7580 Bühl-Oberweier (DE)
Erfinder: GIESELER, Klaus
Birkwaldstr. 14
D-7730 Villingen-Schwenningen-Obereschach
(DE)
Erfinder: KOCHENDÖRFER, Heinrich
Schumannstr. 12
D-7053 Kernen-Rommelshausen (DE)
Erfinder: STEEGMÜLLER, Helmut
Im Vogelsang 15
D-7151 Affalterbach (DE)
Erfinder: COLLMER, Ulrich
deceased (DE)

## Beschreibung

### Stand der Technik

Die Erfindung geht aus von einer Fördereinrichtung zum Transport von Werkstücken nach der Gattung des Anspruchs 1. Durch die US—A—3 051 289 ist eine Fördereinrichtung mit zwei parallelen Transportbahnen bekannt geworden, die je ein außenliegendes Förderband und je ein innenliegendes Förderband sowie mehrere, zwischen den Transportbahnen angeordnet Querförderer haben. Diese Querförderer besitzen je einen stationären Tragrahmen und zwei zu beiden Seiten dieses Rahmens angeordnet Endstücke. Die Endstücke sind an je einer Welle in vertikaler Richtung schwenkbar angebracht, wobei die Schwenkachse vom Querförderer entfernt angeordnet ist.

### Vorteile der erfindung

Die erfindungsgemäße Fördereinrichtung mit dem kennzeichnenden Merkmalen des Anspruchs 1 hat demgegenüber den Vorteil, daß ein separater Trag- und Lagerrahmen für die beiden Endstücke des Querförderers entfällt. Darüber hinaus können die Hubeinrichtungen im Bereich des Tragrahmens des Querförderers angebracht werden, ohne in den Raum der Längsförderer einzugreifen, und schließlich sind an der am Tragrahmen des stationären Teils des Querförderers angebrachten Schwenkwelle sowohl die Umlenkrollen für den stationäen Teil des Querförderers und den beiden Endstücken zugeordnete endlose Gurtbänder gelagert, was bedeutet, daß für die Umlenkung sämtlicher Gurtbänder des Querförderers insgesamt nur zwei Wellen erforderlich sind.

Durch die in den Unteransprüchen aufgeführten Maßnahmen sind vorteilhafte Weiterbildungen und Verbesserungen der im Anspruch 1 angegeben Fördereinrichtungen möglich. Besonders vorteilhaft ist, es, daß die Umlenkrollen für die Gurtbänder des mittelstücks und die auf den Wellen sitzenden Unlenkrollen für die Gurtbänder der Endstücke drehfest miteinander verbunden sind. Dadurch genügt zum Antrieb sämtlicher Gurtbänder ein einziger Motor.

### Zeichnung

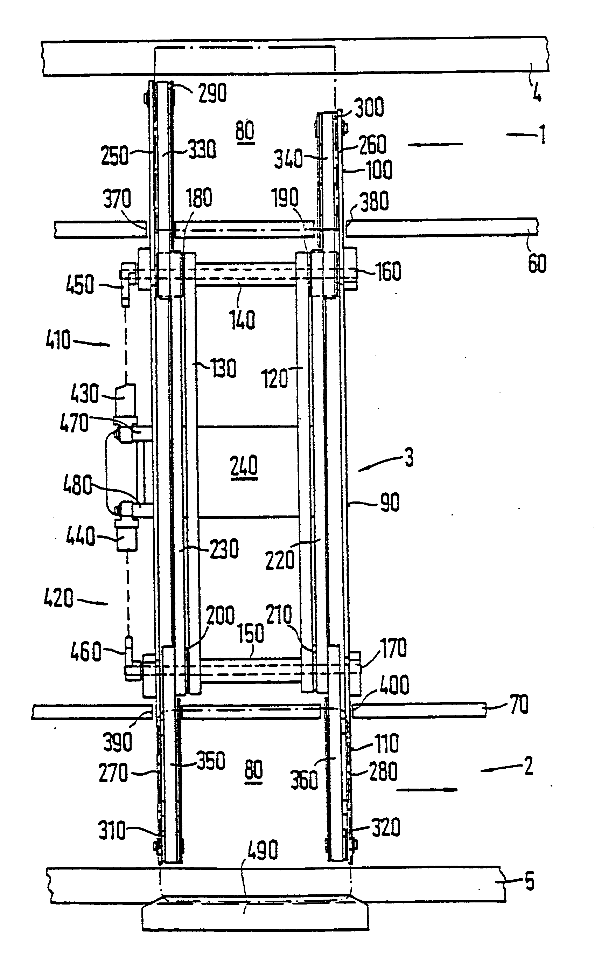

Ein Ausführungsbeispiel der Erfindung ist in der Zeichnung dargestellt und in der nachfolgenden Beschreibung näher erläutert. Die Figur zeigt einen erfindungsgemäß ausgebildeten Querförderer in einer Draufsicht.

### Beschreibung des Ausführungsbeispiels

Die dargestellte Fördereinrichtung besteht im wesentlichen aus zwei parallelen Transportbahnen 1, 2 und einem diese verbindenen Querförderer 3. Die beiden parallelen Transportbahnen 1, 2 haben je ein außenliegendes, angetriebenes Gurtband 4 bzw. 5, das über nicht gezeigte Umlenkrollen läuft und je ein innenliegendes Rollensystem 60 bzw. 70 mit im einzelnen nicht dargestellen Auflage- und Führungsrollen für Werkstückträger 80. Die beiden Transportbahnen 1, 2 sind auf gleicher Höhe liegend an der Übersichtlichkeit wegen nicht gezeigten Gestellen befestigt und verlaufen mit vorgegebenem Abstand parallel zueinander. Die Werkstückträger 80 liegen auf den Gurtbändern 4 bzw. 5 und auf den Rollensystemen 60 bzw. 70 auf und werden mit einer durch den Vorschub der Gurtbänder vorgegebenen Geschwindigkeit transportiert. Die Transportrichtung der beiden Bahnen ist durch Pfeile markiert und verläuft entgegengesetzt.

Zwischen den Transportbahnen 1, 2 befindet sich der bereits erwähnte Querförderer 3, der den Abstand zwischen den Bahnen überbrückt und mit dessen Hilfe Werkstückträger 80 von der Bahn 1 auf die Bahn 2 umgesetzt werden können. Im Einzelnen hat der Querförderer 3 einen Tragrahmen, der aus einem unbeweglichen, fest verankerten Mittelstück 90 und zwei an den beiden Enden des Mittelstücks schwenkbar gelagerten Enstücken 100, 110 besteht. Das Mittelstück 90 weist zwei parallel zueinander angeordnete Schienen 120, 130 auf, die an ihren beiden Enden durch Distanzbuchsen 140, 150 miteinander verbunden sind. Diese Buchsen werden von je einer Welle 160 bzw. 170 durchgriffen, an deren außerhalb der Schienen 120, 130 liegenden Enden je ein Umlenkrollenpaar 180, 190 bzw. 200, 210 drehbar gelagert ist. Über die innenliegenden Umlenkrollen läuft je ein dem Mittelstück 90 zugeordnetes Gurtband 220 bzw. 230. Diese Bänder werden von einem an den Schienen 120, 130 befestigten Motor 240 reibungsschlüssig angetrieben. Die Antriebskraft wird über die Bänder und die innenliegenden Umlenkrollen auf die mit diesen drehfest verbundenen außenliegenden Umlenkrollen der Rollenpaare übertragen.

An beiden Enden der Wellen 160, 170 ist außerdem je eine Schiene 250, 260 bzw. 270, 280 befestigt, an deren freien Enden je eine weitere Umlenkrolle 290, 300 bzw. 310, 320 gelagert ist. Über diese Umlenkrollen und die außenliegenden Umlenkrollen der Umlenkrollenpaare 180 bis 210 laufen weitere Gurtbänder 330 bis 360, von denen die Gurtbänder 330, 340 dem Endstück 100 und die Gurtbänder 350, 360 zum Endstück 110 des Tragrahmens des Querförderers 3 zugeordnet sind.

Wie aus der Zeichnung ersichtlich, kreuzen die Endstücke 100, 110 mit den Schienenpaaren 250, 260 bzw. 270, 280 und den Gurtbändern 330, 340 bzw. 350, 360 die innenliegenden Rollensysteme 60, 70 und überbrücken den Freiraum zwischen diesen Rollensystemen und den außenliegenden Gurtbändern 4, 5 der beiden Transportbahnen 1, 2. Hierzu sind die Rollensysteme mit Aussparungen bzw. Trennungen 370, 380 bzw. 390, 400 für den Durchtritt der Schienenpaare und ihrer Gurtbänder versehen.

Dem Querförderer sind ferner zwei unabhängig voneinander betätigbare Hubeinrichtungen 410, 420 zum vertikalen Schwenken der Endstücke 100, 110 zugeordnet. Diese bestehen im Ausführungsbeispiel aus Pneumatik- bzw. Hydraulikaggregaten, welche je einen Schwenkzylinder 430 bzw. 440 und einen darin geführten Kolben haben, dessen Kolbenstange mit einem auf der Welle 160 bzw. 170 befestigten Hebelarm 450 bzw. 460 gelenkig verbunden ist. Die am Mittelstück 90 des Tragrahmens verankerten Lagerbolzen der Schwenkzylinder sind mit 470 und 480 bezeichnet.

Jede Hubeinrichtung kann unabhängig von der anderen auf drei definierte Vertikalstellungen der Endstücke 100, 110 eingestellt werden. In der unteren Stellung liegen die Endstücke tiefer als die Teile 4, 60 und 5, 70 der Transportbahnen 1 bzw. 2. In dieser Lage beeinflußt der Querförderer die Transportrichtung der von der Transportbahn 1 oder der Transportbahn 2 herangeführten Werkstückträger 80 nicht.

In der Mittelstellung sind die Endstücke von den ihnen zugeordneten Hubeinrichtungen 410 bzw. 420 soweit hochgeschwenkt, daß die als Anschlag ausgebildete Schiene 250 bzw. 270 der Endstücke in die Bewegungsbahn eines auf der Transportbahn 1 oder 2 herangeführten Werkstückträgers 80 gelangt und diesen stoppt. Diese Situation ist in der Figur anhand eines von der Transportbahn 1 herangeführten Werkstückträgers 80 dargestellt. Der Werkstückträger 80 wird von der Schiene 250 auf der Transportbahn 1 angehalten, jedoch noch nicht quer dazu weitertransportiert. Die erfindungsgemäße Einrichtung dient somit auch als Stopper oder Vereinzeler für die Werkstückträger 80.

Will man den durch die Schiene 250 angehaltenen Werkstückträger 80 der Transportbahn 2 zuführen, so werden durch entsprechende Ansteuerung der Hubeinrichtungen 410, 420 die Endstücke 100, 110 in ihrer obere Stellung geschwenkt. Dabei gelangen die Gurtbänder 330, 340 des Endstückes 100 von unten her zur Anlage an den von der Schiene 250 angehaltenen Werkstückträger 80 und heben diesen vom Gurtband 4 und von den Rollen des Rollensystems 60 der Transportbahn 1 ab. Der abgehobene Werkstückträger wird nun von den Gurtbändern 330, 340 des Endstücks auf die Gurtbänder 220, 230 des Mittelstücks 90 geschoben und von diesen an die Gurtbänder 350, 360 des anderen Endstücks 110 weitergegeben. Die Gurtbänder 350, 360 schieben den Werkstückträger 80 gegen einen an der Transportbahn 2 angebrachten Anschlag 490. In dieser Stellung liegt der Werkstückträger 80 über dem Gurtband 5 und den Rollen 70 der Transportbahn 2 und kann durch Absenken des Endstücks 110 in seine mittlere Stellung auf die Teile 5, 70 aufgesetzt und abtransportiert werden. Während des Umsetzens des Werkstückträgers auf die Transportbahn 2 kann das Endstück 100 in seiner oberen Stellung belassen werden, wodurch seine Schiene 260 weitere, auf der Transportbahn 1 herangeführte Werkstückträger 80, anhält. Sobald der auf dem Querförderer 3 befindliche Werkstückträger das Endstück 100 verlassen hat, kann dieses wieder in die Mittelstellung abgesenkt werden, so daß der nächste Werkstückträger vom Gurtband 4 der Transportbahn 1 an die als Anschlag wirkende Schiene 250 des Endstücks 100 herangefürht wird. Die unabhängig voneinander betätigbaren Hubeinrichtungen 410, 420 können so gesteuert werden, daß die beiden Endstücke 100, 110 des Tragrahmens wechselseitig zwischen ihrer mittleren und ihrer oberen Stellung pendeln, wenn ein Quertransport von Werkstückträgern 80 stattfinden soll.

Es ist auch möglich, mehrere Werkstückträger auf dem Querförderer 3 zu speichern, indem das Endstück 110 in seiner oberen Stellung belassen und das Endstück 100 mehrmals zwischen der mittleren und der oberen Stellung hin- und hergeschwenkt wird, wodurch mehrere Werkstückträger 80 auf den Querförderer 3 gelangen, ohne von der Transportbahn 2 abtransportiert zu werden. Ebenso ist es möglich, die Funktion der Transportbahnen 1, 2 zu vertauschen, d.h. die Bahn 2 zum Zubringen und die Bahn 1 zum Abtransport der Werkstückträger 80 zu benutzen. Es ist somit ein Durchlauf, ein Stopp, ein Quertransport, eine Vorvereinzelung, eine Vereinzelung und ein Absetzen von Werkstückträgern 80 auf einer der Transportbahnen möglich.

**Patentansprüche**

1. Fördereinrichtung zum Transport von Werkstücken (80), insbesondere Werkstückträgern, mit zwei parallelen Transportbahnen (1, 2), die je ein außenliegendes Förderband, vorzugweise ein über Rollen geführtes, endloses Gurtband (4, 5) und je ein innenliegender, mit Abstand vom Förderband angeordnete Teil haben sowie mit mindestens einem zwischen den beiden Transportbahnen angeordneten Querförderer (3) mit einem stationären Tragrahmen (90) und zwei zu beiden Seiten diese Rahmens in Verlängerung desselben angeordneten Endstücken (100, 110) welche an je einer Welle (160, 170) in vertikaler Richtung schwenkbar angebracht sind und von denen jedes den innenliegenden Teil einer Transportbahn kreuzt und den Freiraum zwischen diesem Teil und dem außenliegenden Gurtband überbrückt, und an denen je eine Einrichtung (410, 420) zum Schwenken der Endstücke angreift, dadurch gekennzeichnet, daß jeder innenliegende Teil ein Rollensystem ist, jedes Endstück (100 bzw. 110) mit seiner am Tragrahmen (90) des Querförderers gelagerten Welle (160 bzw. 170) drehfest verbunden ist, an welcher eine der zum Schwenken des Endstücks dienenden Hubeinrichtungen (410 bzw. 420) angreift, und auf den Wellen Unklenrollen (180—210) für dem stationären Teil (90) des Querförderers und den beiden Endstükken zugeordnete endlose Gurtbänder (120, 130; 330, 340; 350, 360) gelagert sind.

2. Fördereinrichtung nach Anspruch 1, dadurch gekennzeichnet, daß die Umlenkrollen für die Gurtbänder (120, 130) des Mittelstücks (90) und die auf den Wellen (160, 170) sitzenden Umlenkrollen für die Gurtbänder (330, 340; 350, 360) der Endstücke (100 bzw. 110) drehfest miteinander verbunden sind.

3. Fördereinrichtung nach einem der Ansprüche 1 und 2 dadurch gekennzeichnet, daß als Hubeinrichtung für jedes Endstück (100, 110) ein am Mittelstück (90) der Querförderes (3) verankerter Schwenkzylinder (430 bzw. 440) dient, dessen Kolbenstange mit einem an der Welle (160 bzw. 170) befestigten Hebelarm (450 bzw. 460) drehfest verbunden ist.

## Revendications

1. Convoyeur pour le transport de pièces (80), notamment de porte-pièces, avec deux voies de transport parallèles (1, 2), qui comportent respectivement une bande transporteuse située à l'extérieur, de préférence une bande souple sans fin (4, 5) guidée sur des rouleaux et une partie située à l'intérieur disposée à une certaine distance de la bande transporteuse, et avec au moins une bande transversale (3) disposée, entre les deux voies de transport, qui est pourvue d'un cadre porteur (90) fixe et de deux éléments d'extrémité (100, 110) disposés des deux côtés de ce cadre dans le prolongement de celui-ci, qui sont chacun montés pivotants en direction verticale sur un arbre (160, 170) et dont chacun croise la partie située à l'intérieur d'une voie de transport et comble l'espace libre entre cette partie et la sangle située à l'extérieur et sur chacun desquels éléments d'extrémité agit un dispositif qui les fait pivoter, caractérisé en ce que chaque partie située à l'intérieur est un système à rouleaux, chaque élément d'extrémité (100, 110) est relié calé en rotation avec son arbre (160 ou 170) monté sur le cadre porteur (90) de la bande transversale et est soumis à l'action d'un des dispositifs de levage (410 ou 420) servant au pivotement de l'élément d'extrémité, et en ce que des parties de renvoi (180—210) sont montées sur les arbres pour la partie fixe (90) de la bande transversale et les bandes souples sans fin (120, 130; 330, 340; 350, 360) adjointes aux deux éléments d'extrémité.

2. Convoyeur selon la revendication 1, caractérisé en ce que les poulies des sangles (120, 130) de la partie centrale (90) et les poulies de renvoi fixées sur les arbres (160, 170) pour les sangles (330, 340; 350, 360) des éléments d'extrémité (100 ou 110) sont reliées ensemble et calées en rotation.

3. Convoyeur selon l'une des revendications 1 et 2, caractérisé en ce qu'il est utilisé comme dispositif de levage pour chaque élément d'extrémité (100, 110) un cylindre de pivotement (430 ou 440) ancré sur la partie centrale de la bande transversale, dont la tige de piston est reliée calée en rotation avec un bras de levier (450 ou 460) fixé sur l'arbre.

## Claims

1. Conveyor for transporting work-pieces (80) in particular work-piece carriers, having two parallel transport paths (1, 2) which each have an exterior conveyor belt, preferably a continuous belt strap (4, 5) guided over rollers and each have an interior part arranged at a distance from the conveyor belt, as well as having at least one transverse conveyor (3) arranged between the two transport paths, having a stationary support frame (90) and two end-pieces (100, 110) arranged to both sides in extension of this frame, which end-pieces (110, 110) are each arranged to be swivellable in vertical direction on a shaft (160, 170) and each of which crosses the interior part of a transport path and bridges the gap between this part and the exterior belt strap, and on each of which a device (410, 420) acts to swivel the end-pieces, characterized in that each interior part is a roller system, each end-piece (100 or 110) is connected fixedly in terms of rotation to its shaft (160 or 170) mounted on the support frame (90) of the transverse conveyor, on which shaft (160, 170) one of the lifting devices (410 or 420) serving to swivel the end-piece acts, and in that corner rollers (180—210) are mounted on the shafts for continuous belt straps (120, 130; 330, 340; 350, 360) allocated to the stationary part (90) of the transverse conveyor and the two-end pieces.

2. Conveyor according to Claim 1, characterized in that the corner rollers for the belt straps (120, 130) of the centre piece (90) and the corner rollers, seated on the shafts (160, 170) for the belt straps (330, 340; 350, 360) of the end-pieces (100 or 110) are connected to one another fixedly in terms of rotation.

3. Conveyor according to one of Claims 1 and 2, characterized in that a swivel cylinder (430 or 440), anchored to the centre piece (90) of the transverse conveyor (3) serves as lifting device for each end-piece (100, 110), the piston rod of which swivel cylinder is connected fixedly in terms of rotation to a lever arm (450 or 460) fastened to the shaft (160 or 170).